# EUROPEAN PATENT SPECIFICATION

(11) **EP 3 041 327 B1**
(45) Date of publication and mention of the grant of the patent: **18.04.2018**
(21) Application number: 15150118.6
(22) Date of filing: 05.01.2015
(51) Int. Cl.: H05K 5/06, G09F 9/30, G02F 1/1333

(54) **Waterproof structure for use in display device**
Wasserdichte Struktur zur Verwendung in einer Anzeigevorrichtung
Structure étanche à l'eau destinée à être utilisée dans un dispositif d'affichage

(43) Date of publication of application: 06.07.2016
(73) Proprietor: Avalue Technology Inc., New Taipei City 235 (TW)
(72) Inventor: Lin, Ping-Chih, Zhonghe Dist., New Taipei City 235 (TW); Chen, Cheng-Hsiung, Zhonghe Dist., New Taipei City 235 (TW)
(74) Representative: 2K Patentanwälte Blasberg Kewitz & Reichel

(56) References cited:
- US-A1- 2007 236 465
- US-A1- 2009 101 384

## Description

### BACKGROUND OF THE INVENTION

### FIELD OF THE INVENTION

The present invention relates to a waterproof structure, especially to a waterproof structure for use in display device.

### DESCRIPTION OF RELATED ART

With the development of technology, an electronic device having a screen is commonly used in our daily lives for the purpose of transmitting data at work, exchanging messages or even providing entertainments. A general electronic device, such as a portable device, a smart phone, a tablet computer or even an industrial computer, has become a media widely used by consumers. Also, some consumers heavily rely on these electronic devices, for example thinking about various issues or taking a drink in front of a computer, watching TV in a bathroom, bringing the electronic device while going out, or even operating a computer in a severe environment.

For these precision display devices, moisture may permeate into the electronic device because of poor production or improper operation by consumers. For ensuring the performance and the service life of a display device, a waterproof structure is often installed for reducing the possibility of moisture permeating into the interior of a display device. A conventional waterproof structure for use in display device is to install one or a plurality of waterproof strips at the periphery of the display device, so a waterproof objective can be achieved through the waterproof strips being provided on a panel and a front frame. However, the right-angle connecting locations defined between the waterproof strips are unable to be tightly engaged, and a gap is very easily to be formed at the right-angle connecting locations, so a poor waterproof performance is caused and moisture is allowed to easily permeate. In addition, after the waterproof strip being used for a period of time, the waterproof strip would be deteriorated and fatigued, so the tight adhesion is no longer provided between the waterproof strip and the front frame or between the waterproof strip and the panel, and a situation of water or moisture permeating would occur which may cause short circuit, malfunction or loose contact in the electronic device.

For improving the existed problems, some skilled people in the art provide a design of installing waterproof structures (not limited to the above-mentioned waterproof strip) at proper locations of the display device; however, the installation of each additional waterproof structure would result in more complicated in production, increasing the production cost and hard to simplify the production procedure for satisfying massive production.

In view of the above-mentioned problems, the applicant of the present invention provides a design of enabling the water permeated into the display device to be easily discharged while the display device being in use, so the water can be prevented from being remained inside the machinery and the smooth operation of internal components can be ensured.

US 20070236465A relates to a face panel mounting structure which includes a base frame, which is mountable on a front side of a LCD monitor and has a plurality of locating grooves at one side thereof, a face panel, and a packing member, which has a back bonding surface bonded to a border area of a front side of the face panel and a plurality of compressible locating blocks protruding from the front side thereof and respectively pressfitted into the locating grooves of the base frame to detachably secure the face panel to the base frame in a watertight manner.

US 20090101384A relates to a waterproof structure for the space between a first case and a diaphragm doubling as a display panel provided facing the first case, a first resilient member is integrally formed at a surface of the diaphragm facing the first case, and the first resilient member is press-fitted into a groove formed in a surface of the first case facing the diaphragm side.

### SUMMARY OF THE INVENTION

The present invention is to provide a waterproof structure for use in display device capable of effectively buffering the speed of moisture permeating into the display device so as to prolong the service life.

The present invention is to provide a waterproof structure for use in display device capable of effectively discharging water thereby preventing the water from being remained in the display device so as to ensure the smooth operation of internal components.

Accordingly, the present invention provides a waterproof structure for use in display device, which includes a back cover, a display module and a waterproof member. The back cover includes a peripheral part of back cover, a stop part connected to the peripheral part of back cover, and a groove defined between the peripheral part of back cover and the stop part, wherein the height of the peripheral part of back cover is greater than the height of the stop part. The display module is disposed on the back cover. The waterproof member is disposed between the display module and the stop part.

Preferably, the peripheral part of back cover and the stop part are continuously connected thereby forming an enclosed rectangular shape allowing the display module to be disposed. The groove further includes a plurality of partition pieces, each of the partition pieces is respectively connected to one lateral wall of the peripheral part of back cover and one lateral wall of the stop part, and the length/height of each of the partition pieces is smaller than the length/height of the stop part. Each of the partition pieces is formed in a rectangular, elliptical or polygonal shape.

Preferably, the waterproof member is formed in an annular status and adhered on one lateral surface of the display module. The waterproof member is integrally formed as an annular structure adhered on one lateral surface of the display module. The waterproof member includes two waterproof parts, and the cutting surface of each of the waterproof parts is respectively formed as an inclined surface or a polygonal surface for being engaged with each other so as to form an annular structure.

In comparison with related art, the present invention has advantageous features as follows. Through each of the partition pieces being connected to the peripheral part of back cover and the stop part, the danger of water or moisture permeating into the display module can be further relieved, so the display module is able to be prevented from being damaged or abnormally operated, and an advantage of convenient in production can also be provided. In other words, the installation of the partition pieces can solve the problem of the stop part generating stress concentration due to the smaller dimension, and the groove between the peripheral part of back cover and the stop part is also provided with an advantage of allowing a mold to be easily released. Moreover, for increasing the production efficiency and enhancing the positioning effect, the present invention further includes a supporter. The supporter installed corresponding to the back cover is formed with at least one semi-circular positioning post allowing at least one positioning hole formed on the back cover to be assembled and positioned.

### BRIEF DESCRIPTION OF DRAWING

FIG. 1 is an exploded view showing a waterproof structure for use in display device according to one embodiment of the present invention;
FIG. 2 is a cross sectional view showing the assembly of the waterproof structure for use in display device according to one embodiment of the present invention;
FIG.3 is a partially enlarged view of FIG. 2;
FIG. 4 is a perspective view showing the waterproof member according to the present invention;
FIG. 5 is a partially enlarged view of FIG. 4;
FIG. 6 is a schematic view of FIG. 4 according to another embodiment of the present invention;
FIG. 7 is a partially frontal view showing the back cover according to the present invention;
FIG. 8 is a cross sectional view of FIG. 7 taken along A-A;
FIG. 9 is another partially frontal view showing the back cover according to the present invention; and
FIG. 10 is a cross sectional view of FIG. 9 taken along B-B.

### DETAILED DESCRIPTION OF THE INVENTION

The present invention provides a waterproof structure for use in display device capable of slowing moisture permeating into the display device. According to the present invention, the display device is preferably to be a computer system capable of being independently operated and installed with a screen, such as a tablet computer, an industrial computer or other similar electronic devices. However, according to other embodiments, the display device can also be an electronic device having a screen, such as a notebook computer, a mobile phone, a digital camera, a monitor or other electronic devices. The backlight source of the display device includes, but not limited to, a liquid crystal, light emitting diode (LED) or plasma for providing the backlight source. Preferred embodiments of the present invention will be described with reference to the drawings.

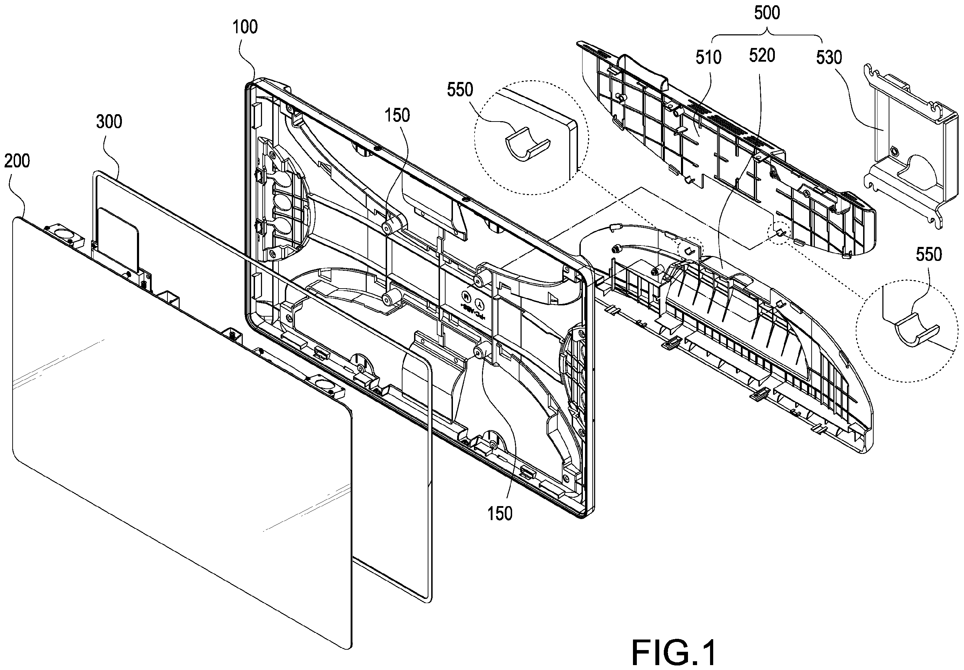

Please refer from FIG. 1 to FIG. 3, the waterproof structure for use in display device includes a back cover 100, a display module 200 and a waterproof member 300. The back cover 100 includes a peripheral part of back cover 110, a stop part 120 connected to the peripheral part of back cover 110 and a groove 130 defined between the peripheral part of back cover 110 and the stop part 120, wherein the height of the peripheral part of back cover 110 is greater than the height of the stop part 120. The display module 200 is disposed on the back cover 100. The waterproof member 300 is disposed between the display module 200 and the stop part 120.

According to this embodiment, a supporter 500 is further included for being assembled with the back cover 100. For increasing the production efficiency and enhancing the positioning effect, at least one semi-circular positioning post 550 is formed on the supporter 500 corresponding to the back cover 100, thereby allowing at least one positioning hole 150 formed on the back cover 100 to be assembled and positioned. As shown in FIG. 1, the supporter 500 further includes an upper support 510 and a lower support 520 and a connection piece 530 respectively connected to the upper support 510 and the lower support 520. Substantially, each of the semi-circular positioning posts 550 is preferably to be respectively formed on one lateral surface of the upper support 510 and one lateral surface of the lower support 520, thereby allowing the corresponding positioning holes 150 of the back cover 100 to be assembled and positioned. The semi-circular positioning post 550 is provided with an advantage of less likely to generate stress concentration thereby avoiding the occurrence of deformation, and a more precise positioning relation can be formed between the semi-circular positioning post 550 and the positioning hole 150.

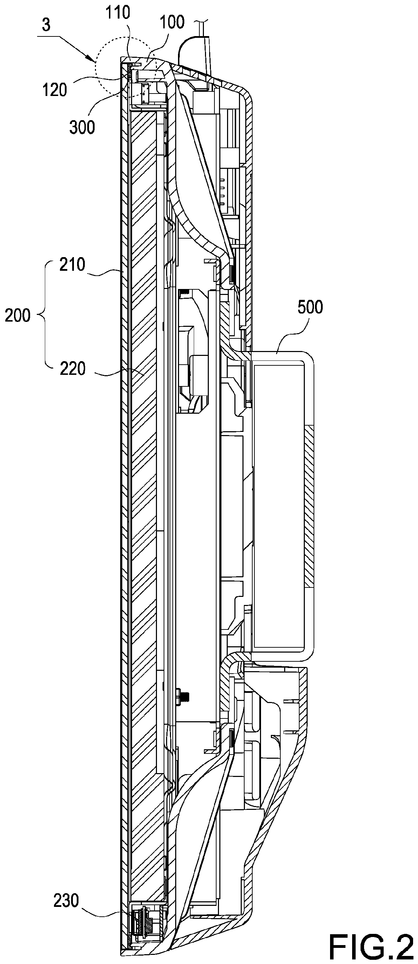

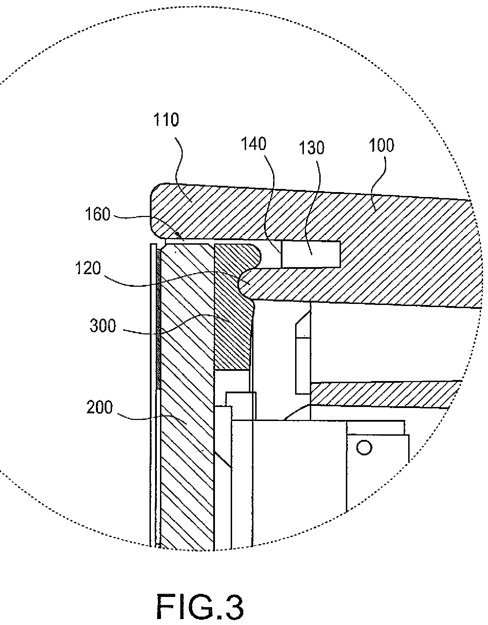

As shown in FIG. 2, the display module 200 includes a display panel 210, a backlight source 220, a drive IC and circuit board 230 or other components. The display module 200 is deemed as a prior art, therefore no further illustration is provided. As shown in FIG. 1 and FIG. 2, the peripheral part of back cover 110 and the stop part 120 are continuously connected thereby forming an enclosed rectangular shape allowing the display module 200 to be disposed. As shown in FIG. 3, the groove 130 further includes a plurality of partition pieces 140, and each of the partition pieces 140 is respectively connected to one lateral wall of the peripheral part of back cover 110 and one lateral wall of the stop part 120; in other words two sides of each of the partition pieces 140 are respectively connected to the lateral wall of the peripheral part of back cover 110 and the lateral wall of the stop part 120 defined in the groove 130, the above-mentioned structure will be further disclosed thereinafter.

For allowing the display module 200 to be easily assembled with the back cover 100, the back cover 100 can be formed with an assembly tolerance for facilitating the assembly of the display module 200. As shown in FIG. 3, one side of the display module 200 or the waterproof member 300 is adjacently connected to an inner wall of the peripheral part of back cover 110, so water may enter from the assembly tolerance. However, the groove 130 between the peripheral part of back cover 110 and the stop part 120 is able to provide a buffering effect, so water is prevented from directly flowing in from a gap 160 defined between the back cover 100 and the display module 200. Even if the water accidentally flows in the groove 130 disclosed in this embodiment, the groove 130 can be served to effectively discharge the water from the gap 160, thereby preventing water from remaining in the electronic device, and the smooth operation of internal components can be ensured. Moreover, according to the embodiment disclosed in FIG. 3, the thickness/width of the peripheral part of back cover 110 is greater than the thickness/width of the stop part 120.

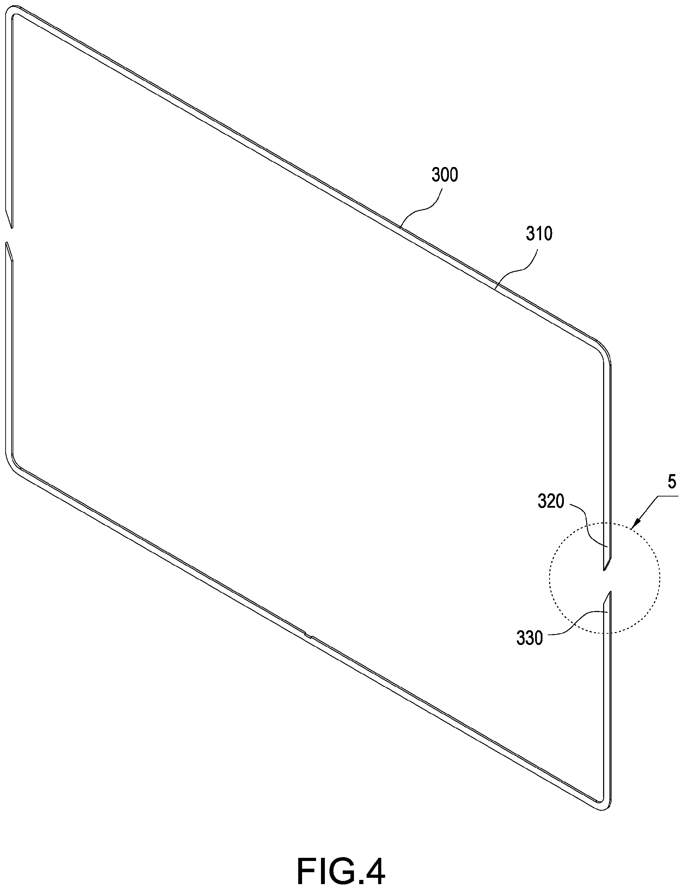

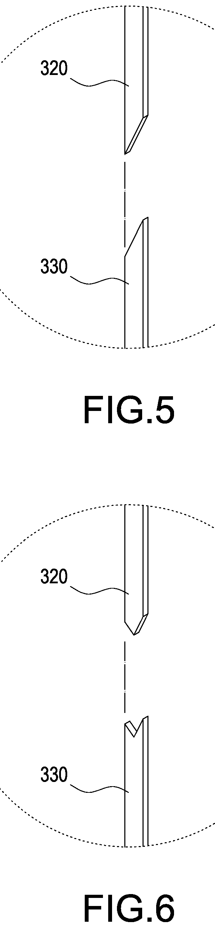

Please refer to FIG. 4, the waterproof member 300 is formed in an annular status and adhered on one lateral surface of the display module 200. Preferably, the waterproof member 300 is integrally formed as an annular structure 310 adhered on one lateral surface of the display module 200. As shown in FIG. 4, the waterproof member 300 can also be formed as the annular structure 310 composed of two waterproof parts 320, 330 being engaged with each other. For preventing moisture from permeating into the display module 200 from the cutting edges of the waterproof parts 320, 330, the cutting surface of each of the waterproof parts 320, 330 is formed as an inclined surface as shown in FIG. 5. According to the embodiment disclosed in FIG. 6, the cutting surface of each of the waterproof parts 320, 330 can also be formed as a polygonal surface or other suitable geometric surface. Moreover, the material of which the waterproof member 300 is made can be: silicon, plastic, rubber, Polyethylene Terephthalate PET or other suitable materials.

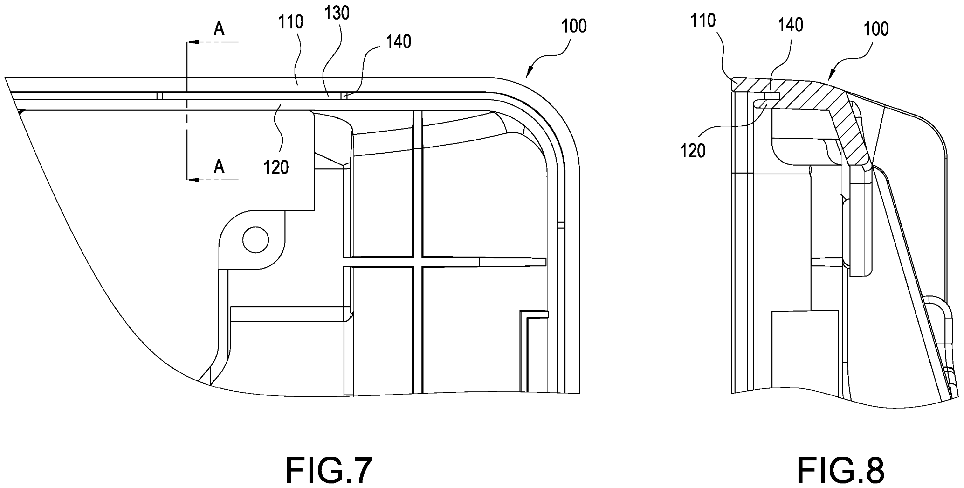

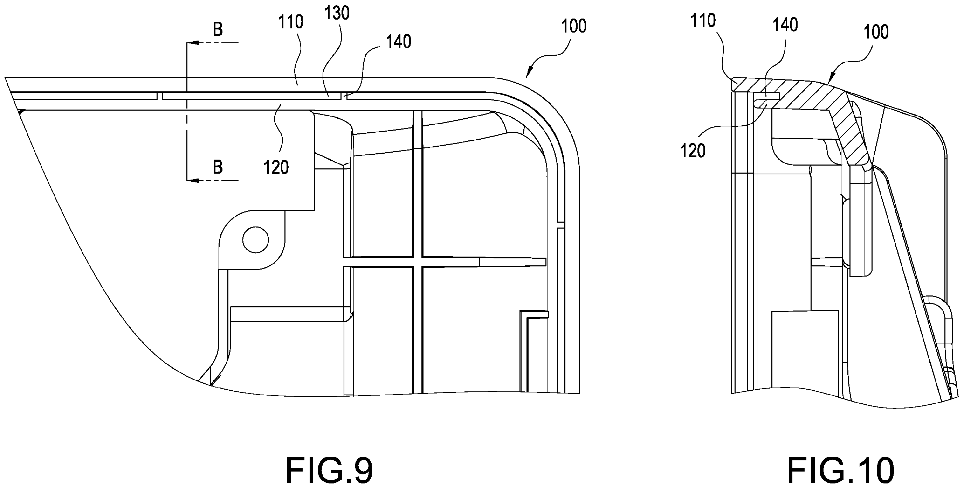

Please refer to FIG. 7 and FIG. 8, each of the partition pieces 140 arranged at the periphery of the back cover 100 is mainly served to increase the difficulty for moisture entering the display module 200; in other words the time for moisture directly permeating into the electronic device can be buffered. According to this embodiment, the length/height of each of the partition pieces 140 is smaller than the length/height of the stop part 120. However, according to the embodiment disclosed in FIG. 9 and FIG. 10, the length/height of each of the partition pieces 140 can also be equal to the length/height of the stop part 120 with respect to the actual needs. Moreover, the shape of each of the partition pieces 104 can be for example but not limited to rectangular, elliptical or polygonal.

Through each of the partition pieces 140 being connected to the peripheral part of back cover 110 and the stop part 120, the danger of water or moisture permeating into the display module 200 can be further relieved, the display module 200 is able to be prevented from being damaged or abnormally operated, and an advantage of convenient in production can also be provided. In other words, the installation of the partition pieces 140 can solve the problem of the stop part 120 generating stress concentration due to the smaller dimension, and the groove 130 between the peripheral part of back cover 110 and the stop part 120 is also provided with an advantage of allowing a mold to be easily released.

In summary a waterproof structure for use in display device is discloses, the structure includes a back cover 100, a display module 200 and a waterproof member 300. The back cover 100 includes a peripheral part of back cover 110, a stop part 120 connected to the peripheral part of back cover 110, and a groove 130 defined between the peripheral part of back cover 110 and the stop part 120, wherein the height of the peripheral part of back cover 110 is greater than the height of the stop part 120. The display module 200 is disposed on the back cover 100. The waterproof member 300 is disposed between the display module 200 and the stop part 120. Accordingly, the speed of moisture permeating into the display device can be buffered so as to prolong the service life.

## Claims

1. A waterproof structure for use in display device, including:
a back cover (100), including a peripheral part of back cover (110), a stop part (120) connected to the peripheral part of back cover (110), and a groove (130) defined between the peripheral part of back cover (110) and the stop part (120), wherein a height of the peripheral part of back cover (110) being greater than a height of the stop part (120);
a display module (200), disposed on the back cover (100); and
a waterproof member (300), disposed between the display module (200) and the stop part (120),
**characterized in that** a gap (160) is defined between the back cover (100) and the display module (200), and the groove (130) can be served to discharge water from the gap (160).

2. The waterproof structure for use in display device according to claim 1, wherein the peripheral part of back cover (110) and the stop part (120) are continuously connected thereby forming an enclosed rectangular shape allowing the display module (200) to be disposed.

3. The waterproof structure for use in display device according to claim 1 or 2, wherein the groove (130) further includes a plurality of partition pieces (140), and each of the partition pieces (140) is respectively connected to one lateral wall of the peripheral part of back cover (110) and one lateral wall of the stop part (120).

4. The waterproof structure for use in display device according to claim 3, wherein a length/height of each of the partition pieces (140) is smaller than a length/height of the stop part (120), and each of the partition pieces (140) is formed in a rectangular, elliptical or polygonal shape.

5. The waterproof structure for use in display device according to one of the preceding claims, wherein a thickness/width of the peripheral part of back cover (110) is greater than a thickness/width of the stop part (120).

6. The waterproof structure for use in display device according to one of the preceding claims, wherein one side of the display module (200) or the waterproof member (300) is adjacently connected to an inner wall of the peripheral part of back cover (110).

7. The waterproof structure for use in display device according to one of the preceding claims, wherein the waterproof member (300) is formed in an annular status and adhered on one lateral surface of the display module (200).

8. The waterproof structure for use in display device according to one of the preceding claims, wherein the waterproof member (300) is integrally formed as an annular structure (310) adhered on one lateral surface of the display module (200).

9. The waterproof structure for use in display device according to one of the preceding claims, wherein the waterproof member (300) includes two waterproof parts (320, 330), and a cutting surface of each of the waterproof parts (320, 330) is respectively formed as an inclined surface or a polygonal surface for being engaged with each other so as to form an annular structure (310).

10. The waterproof structure for use in display device according to one of the preceding claims, further including a supporter (500), and the supporter (500) is formed with at least one semi-circular positioning post (550), the back cover (100) is further formed with at least one positioning hole (150) thereby allowing the at least one semi-circular positioning post (550) to be positioned.

## Patentansprüche

1. Wasserdichte Struktur zur Verwendung in einer Anzeigevorrichtung, umfassend:
eine hintere Abdeckung (100) enthaltend einen Umfangsteil der hinteren Abdeckung (110), einen Anschlagsteil (120), der mit dem Umfangsteil der hinteren Abdeckung (110) verbunden ist, und eine Nut (130), die zwischen dem Umfangsteil der hinteren Abdeckung (110) und dem Anschlagsteil (120) definiert ist, wobei eine Höhe des Umfangsteils der hinteren Abdeckung (110) größer als eine Höhe des Anschlagteils (120) ist;
ein Anzeigemodul (200), das auf der hinteren Abdeckung (100) angeordnet ist; und
ein wasserdichtes Element (300), das zwischen dem Anzeigemodul (200) und dem Anschlagteil (120) angeordnet ist,
**dadurch gekennzeichnet, dass** ein Spalt (160) zwischen der hinteren Abdeckung (100) und dem Anzeigemodul (200) definiert ist und die Nut (130) dazu beschaffen ist, Wasser aus dem Spalt (160) abzuleiten.

2. Wasserdichte Struktur zur Verwendung in einer Anzeigevorrichtung nach Anspruch 1, wobei der Umfangsteil der hinteren Abdeckung (110) und der Anschlagsteil (120) kontinuierlich miteinander verbunden sind, wodurch eine geschlossene rechteckige Form gebildet wird, die es ermöglicht, das Anzeigemodul (200) anzuordnen.

3. Wasserdichte Struktur zur Verwendung in einer Anzeigevorrichtung nach Anspruch 1 oder 2, wobei die Nut (130) weiterhin eine Vielzahl von Unterteilungsstücken (140) aufweist und jedes der Unterteilungsstücke (140) jeweils mit einer Seitenwand des Umfangsteils der hinteren Abdeckung (110) und einer Seitenwand des Anschlagteils (120) verbunden ist.

4. Wasserdichte Struktur zur Verwendung in einer Anzeigevorrichtung nach Anspruch 3, wobei eine Länge/Höhe jedes der Unterteilungsstücke (140) kleiner als eine Länge/Höhe des Anschlagteils (120) ist und jedes der Unterteilungsstücke (140) in einer rechteckigen, elliptischen oder polygonalen Form ausgebildet ist.

5. Wasserdichte Struktur zur Verwendung in einer Anzeigevorrichtung nach einem der vorstehenden Ansprüche, wobei eine Dicke/Breite des Umfangsteils der hinteren Abdeckung (110) größer als eine Dicke/Breite des Anschlagteils (120) ist.

6. Wasserdichte Struktur zur Verwendung in einer Anzeigevorrichtung nach einem der vorstehenden Ansprüche, wobei eine Seite des Anzeigemoduls (200) oder des wasserdichten Elements (300) benachbart mit einer Innenwand des Umfangteils der hinteren Abdeckung (110) verbunden ist.

7. Wasserdichte Struktur zur Verwendung in einer Anzeigevorrichtung nach einem der vorstehenden Ansprüche, wobei das wasserdichte Element (300) in einem ringförmigen Zustand ausgebildet und auf einer Seitenfläche des Anzeigemoduls (200) verklebt ist.

8. Wasserdichte Struktur zur Verwendung in einer Anzeigevorrichtung nach einem der vorstehenden Ansprüche, wobei das wasserdichte Element (300) integral als ringförmige Struktur (310) ausgebildet ist, die auf einer Seitenfläche des Anzeigemoduls (200) verklebt ist.

9. Wasserdichte Struktur zur Verwendung in einer Anzeigevorrichtung nach einem der vorstehenden Ansprüche, wobei das wasserdichte Element (300) zwei wasserdichte Teile (320, 330) aufweist und wobei eine Schneidfläche von jedem der wasserdichten Teile (320, 330) jeweils als geneigte Fläche oder als polygonale Fläche ausgebildet ist, um miteinander in Eingriff zu kommen, um eine ringförmige Struktur (310) zu bilden.

10. Wasserdichte Struktur zur Verwendung in einer Anzeigevorrichtung nach einem der vorstehenden Ansprüche, ferner enthaltend einen Träger (500), und wobei der Träger (500) mit mindestens einem halbkreisförmigen Positionierungsstab (550) ausgebildet ist, wobei die hintere Abdeckung (100) ferner mit mindestens einem Positionierungsloch (150) ausgebildet ist, wodurch die Positionierung des mindestens einen halbkreisförmigen Positionierungsstabs (550) ermöglicht wird.

## Revendications

1. Une structure étanche à l'eau destinée à être utilisée dans un dispositif d'affichage, comprenant:
une couverture arrière (100) comprenant une partie périphérique de couverture arrière (110), une partie d'arrêt (120) reliée à la partie périphérique de couverture arrière (110) et une rainure (130) définie entre la partie périphérique de couverture arrière (110) et la partie d'arrêt (120), dans lequel une hauteur de la partie périphérique de la couverture arrière (110) est supérieure à une hauteur de la partie d'arrêt (120);
un module d'affichage (200), disposé sur la couverture arrière (100); et
un étanche à l'eau (300), disposé entre le module d'affichage (200) et la partie d'arrêt (120),
**caractérisé en ce qu'**un espace (160) est défini entre la couverture arrière (100) et le module d'affichage (200), et la rainure (130) peut servir à évacuer l'eau venant de l'espace (160).

2. La structure étanche à l'eau destinée à être utilisée dans un dispositif d'affichage selon la revendication 1, dans laquelle la partie périphérique de la couverture arrière (110) et la partie d'arrêt (120) sont connectées en continu formant ainsi une forme rectangulaire fermée permettant d'y disposer le module d'affichage (200).

3. La structure étanche à l'eau destinée à être utilisée dans un dispositif d'affichage selon la revendication 1 ou 2, dans laquelle la rainure (300) comprend en outre une pluralité de pièces de séparation (140), et chacune des pièces de séparation (140) est respectivement connectée à une paroi latérale de la partie périphérique de la couverture arrière (110) et une paroi latérale de la partie d'arrêt (120).

4. La structure étanche à l'eau destinée à être utilisée dans un dispositif d'affichage selon la revendication 3, dans laquelle une longueur/hauteur de chacune des pièces de séparation (140) est inférieure à une longueur/hauteur de la partie d'arrêt (120), et chacune des pièces de séparation (140) est formée suivant une forme rectangulaire, elliptique ou polygonale.

5. La structure étanche à l'eau destinée à être utilisée dans un dispositif d'affichage selon l'une des revendications précédentes, dans laquelle une épaisseur/largeur de la partie périphérique de la couverture arrière (110) est supérieure à une épaisseur/largeur de la partie d'arrêt (120).

6. La structure étanche à l'eau destinée à être utilisée dans un dispositif d'affichage selon l'une des revendications précédentes, dans laquelle un côté du module d'affichage (200) ou de l'élément étanche à l'eau (300) est relié de manière adjacente à une paroi interne de la partie périphérique du couvercle arrière .

7. La structure étanche à l'eau destinée à être utilisée dans un dispositif d'affichage selon l'une des revendications précédentes, dans laquelle l'élément étanche à l'eau (300) est formé dans un état annulaire et collé sur une surface latérale du module d'affichage (200).

8. La structure étanche à l'eau destinée à être utilisée dans un dispositif d'affichage selon l'une des revendications précédentes, dans laquelle l'élément étanche à l'eau (300) est formé intégralement comme une structure annulaire (310) collée sur une surface latérale du module d'affichage (200).

9. La structure étanche à l'eau destinée à être utilisée dans un dispositif d'affichage selon l'une des revendications précédentes, dans laquelle l'élément imperméable (300) comprend deux parties étanches (320, 330), et une surface de coupe de chacune des parties étanches (320, 330) sous la forme d'une surface inclinée ou une surface polygonale pour être en prise l'une avec l'autre de manière à former une structure annulaire (310).

10. La structure étanche à l'eau destinée à être utilisée dans un dispositif d'affichage selon l'une des revendications précédentes, comprenant en outre un support (500), et le support (500) est formé avec au moins une tige de positionnement semi-circulaire (550), le couvercle arrière (100)) est en outre formé avec au moins un trou de positionnement (150), permettant ainsi de positionner la ou les tige(s) de positionnement semi-circulaire (550).
